# EUROPEAN PATENT APPLICATION

(11) **EP 4 827 223 A1**
(43) Date of publication of application: **21.10.2026**
(21) Application number: 25744580.9
(22) Date of filing: 21.01.2025
(51) Int. Cl.: H04W 74/00

(54) **COMMUNICATION METHOD AND APPARATUS, READABLE STORAGE MEDIUM, AND COMPUTER PROGRAM PRODUCT**

(30) Priority: 25.01.2024 CN 202410114361
(71) Applicant: Huawei Technologies Co., Ltd., Shenzhen, Guangdong 518129 (CN)
(72) Inventor: YU, Tianhang, Shenzhen, Guangdong 518129 (CN); YANG, Ruonan, Shenzhen, Guangdong 518129 (CN); WANG, Yu, Shenzhen, Guangdong 518129 (CN); WANG, Jun, Shenzhen, Guangdong 518129 (CN)
(74) Representative: Goddar, Heinz J.
(86) International application number: PCT/CN2025/073714
(87) International publication number: WO 2025/157141

(57) **Abstract**

A communication method and apparatus, a readable storage medium, and a computer program product relate to the communication field, and are used for configuring a resource used for random access more reasonably. In this solution, a terminal apparatus receives first configuration information, where the first configuration information includes information indicating a first resource. The terminal apparatus sends a first signal on the first resource. A received power value corresponding to the first resource may be used for determining a quantity of terminal apparatuses having a random access requirement. For example, the quantity of terminal apparatuses having the random access requirement can be used for resource configuration (for example, used for determining a quantity of allocated resources used for random access). In this way, the quantity of allocated resources can be configured more reasonably, thereby saving resources.

## Description

### CROSS-REFERENCE TO RELATED APPLICATIONS

This application claims priority to Chinese Patent Application No. 202410114361.2, filed with the China National Intellectual Property Administration on January 25, 2024 and entitled "COMMUNICATION METHOD AND APPARATUS, READABLE STORAGE MEDIUM, AND COMPUTER PROGRAM PRODUCT", which is incorporated herein by reference in its entirety.

### TECHNICAL FIELD

This application relates to the communication field, and in particular, to a communication method and apparatus, a readable storage medium, and a computer program product.

### BACKGROUND

Currently, 5th generation mobile network (the 5th generation, 5G) new radio (new radio, NR) technology is evolving from R18 to R19. In addition, the NR technology evolves from the standardization phase to the commercial deployment phase. The NR standard protocol specifies wireless communication technologies designed for terrestrial cellular network scenarios, and can provide ultra-low latency, ultra-high reliability, ultra-high speed, and massive connectivity wireless communication services for users. In comparison with terrestrial communication, non-terrestrial network (non-terrestrial network, NTN) communication has features such as large coverage region and flexible networking, and can achieve seamless global network coverage. The NTN communication includes networking by using devices such as uncrewed aerial vehicles, high-altitude platforms, and satellites, to provide services such as data transmission and voice communication for user equipment (user equipment, UE).

With the development of NTN, the coverage area of a beam of an NTN apparatus may reach dozens of kilometers or even hundreds of kilometers. In the coverage area, there are a large quantity of terminal apparatuses having an access requirement, so that a large quantity of resources used for random access are needed. In this way, how to more reasonably configure resources used for random access remains to be addressed.

### SUMMARY

This application provides a communication method and apparatus, a readable storage medium, and a computer program product, to determine, based on a received power value corresponding to a first resource, a quantity of terminal apparatuses having a random access requirement. The quantity may be used for configuring a resource, used for random access, more reasonably.

According to a first aspect, an embodiment of this application provides a communication method. The method may be performed by a terminal apparatus. The terminal apparatus in embodiments of this application may be a network device (or an NTN device), or may be a chip (or a chip system) inside the network device (or the NTN device). For example, the terminal apparatus may be a terminal device or a chip (or a chip system) in the terminal device.

In this solution, the terminal apparatus receives first configuration information, where the first configuration information includes information indicating a first resource. The terminal apparatus sends a first signal on the first resource. The first resource may be used by at least one terminal apparatus to send a signal. To be specific, the first NTN apparatus may receive, on the first resource, a signal sent by one or more terminal apparatuses, and then determine a received power value corresponding to the first resource. The received power value corresponding to the first resource has a plurality of usages. For example, the received power value may be used for determining a quantity of terminal apparatuses having a random access requirement.

The quantity of terminal apparatuses having the random access requirement has a plurality of usages. For example, the quantity of terminal apparatuses having the random access requirement can be used for resource configuration (for example, used for determining a quantity of allocated resources used for random access). In this way, the quantity of allocated resources can be configured more reasonably, thereby saving resources.

In another possible implementation, the coverage area of the first NTN apparatus is divided into a plurality of regions based on some parameters. Terminal density of two regions may be different, or this is understood as that quantities of terminal apparatuses having random access requirements are different. If a same quantity of resources (for example, resources used for random access) are allocated to each region, quantities of resources corresponding to some regions are excessively large, causing a waste of resources. However, an excessively small quantity of corresponding resources are allocated to some regions, causing a high probability of a conflict between terminal apparatuses, and causing a difficult process of accessing a network by the terminal apparatus. In a possible implementation provided in this embodiment of this application, the first NTN apparatus may separately estimate, for each region, a quantity of terminal apparatuses that have the random access requirement and that are in the region, and then allocate a resource (for example, a resource used for random access) to the region based on the quantity of terminal apparatuses that have the random access requirement and that are in the region.

For example, the coverage area of the first NTN apparatus may be divided into regions based on a synchronization signal and physical broadcast channel block (synchronization signal and physical broadcast channel block, SSB). For example, one SSB of the first NTN apparatus is associated with one region. For example, the first resource is associated with the first SSB, and the first resource is used, to send a signal, by at least one terminal apparatus that is in the region associated with the first SSB. To be specific, the first NTN apparatus may receive, on the first resource, a signal sent by one or more terminal apparatuses in the region associated with the first SSB, to determine the received power value corresponding to the first resource. In this case, the received power value corresponding to the first resource is used for determining a quantity of terminal apparatuses that have the random access requirement and that are in the region associated with the first SSB. In this solution, a resource may be separately configured for a region that is obtained by dividing the coverage area of the first NTN apparatus and that is at a smaller granularity, thereby saving resources.

In a possible implementation, the first signal is a first preamble sequence, and the first configuration information further includes information indicating the first preamble sequence. For example, the information indicating the first preamble sequence includes at least one of the following: a type of the first preamble sequence, a length of the first preamble sequence, a root sequence of the first preamble sequence, a quantity of repetitions of the first preamble sequence, and a cyclic shift corresponding to the first preamble sequence. It can be learned that, in this solution, a preamble sequence originally used for random access may be reused (or this may be understood as that the preamble sequence is originally used for random access, but the preamble sequence is used as the first signal in this application). In this case, information indicating the first signal may be the same as an existing parameter item indicating the preamble sequence, and a specific parameter value may be set separately. It can be learned that this solution is compatible with a conventional technology.

In a possible implementation, the cyclic shift corresponding to the first preamble sequence is a cyclic shift 0. This may also be understood as that preamble sequences sent by a plurality of terminal apparatuses in the region associated with the first SSB are the same. For signals sent by a plurality of terminal apparatuses on the first resource, the first NTN apparatus does not need to identify transmit ends of the signals, so that the signals sent by the terminal apparatuses do not need to have effect of distinguishing between the terminal apparatuses. Therefore, the cyclic shift corresponding to the first preamble sequence sent by the terminal apparatus may be the cyclic shift 0. This solution can reduce solution processing complexity of the transmit end.

In another possible implementation, the cyclic shift corresponding to the first preamble sequence is a random cyclic shift. This may also be understood as that preamble sequences sent by a plurality of terminal apparatuses in the region associated with the first SSB may be different or may be the same, and these cases are random. In this solution, randomness of a phase can be increased, so that distribution of received power values of the first NTN apparatus is more centralized, and the quantity of terminal apparatuses having the access requirement can be more accurately determined.

In a possible implementation, the terminal apparatus receives second configuration information. The second configuration information indicates a second resource, the second resource is used for perform random access by a terminal apparatus that is in the region associated with the first SSB, and the second resource is determined based on the quantity of terminal apparatuses that have the random access requirement and that are in the region associated with the first SSB. The terminal apparatus sends a second preamble sequence on a resource in the second resource, where the second preamble sequence is used for random access.

In this embodiment of this application, the first NTN apparatus may allocate, based on the quantity of terminal apparatuses that have the access requirement and that are in the region associated with the first SSB, a resource used for random access to the terminal apparatus that is in the region associated with the first SSB. Quantities of resources used for random access that are allocated to regions associated with two SSBs may be different (or may be the same). In other words, the first NTN apparatus may allocate a resource, used for random access, at a granularity of the region associated with the SSB (or referred to as a beam granularity). Not a same random access resource is allocated to a region associated with each SSB of a cell. In this way, in this solution, a resource used for random access can be allocated more reasonably, random access requirements in different regions can be met, resources can be saved, and resource utilization can be improved.

In a possible implementation, the first resource meets one of the following: The first resource belongs to a resource corresponding to a random access occasion RO associated with the first SSB. In this solution, the information indicating the first resource may be index information of one resource corresponding to the RO associated with the first SSB. In this solution, a quantity of bits occupied by the information indicating the first resource can be reduced, thereby reducing signaling overheads.

In a possible implementation, the first resource does not belong to a resource corresponding to an RO associated with the first SSB, and a time domain of the first resource completely or partially overlaps a resource corresponding to at least one random access occasion associated with the first SSB. When the time domain of the first resource completely overlaps the resource corresponding to the at least one RO associated with the first SSB, the information indicating the first resource may not include a large amount of indication information of time domain resources, thereby reducing signaling overheads. In addition, in this solution, the first NTN apparatus may simultaneously receive a signal on the first resource and a signal on a resource corresponding to the resource corresponding to the RO, thereby reducing scheduling complexity of the first NTN apparatus.

In a possible implementation, the first configuration information further includes information indicating a power value. The terminal apparatus determines, based on the power value, a transmit power value corresponding to the first signal. For example, the power value is an expected received power value. The terminal apparatus sends the first signal on the first resource at the transmit power value corresponding to the first signal. Because a plurality of terminal apparatuses may send signals on the first resource, and the first NTN apparatus needs to estimate, based on the received power value corresponding to the first resource, a quantity of terminal apparatuses, power values of signals sent by the terminal apparatuses need to be close or the same when the signals arrive at the first NTN apparatus. In this way, accuracy of the quantity of terminal apparatuses estimated by the first NTN apparatus can be improved. However, in this embodiment of this application, the first configuration information may indicate a power value, so that accuracy of the quantity of terminal apparatuses estimated by the first NTN apparatus can be improved.

In a possible implementation, the terminal apparatus determines, based on the power value and a position of the terminal apparatus in the region associated with the first SSB, the transmit power value corresponding to the first signal. In this solution, power values of signals sent by terminal apparatuses at various positions may be close or the same when the signals arrive at the first NTN apparatus, thereby improving accuracy of the quantity of terminal apparatuses estimated by the first NTN apparatus.

According to a second aspect, an embodiment of this application provides a communication method. The method may be performed by a first NTN apparatus. The first NTN apparatus in embodiments of this application may be a network device (or an NTN device), or may be a chip (or a chip system) inside the network device (or the NTN device). For example, the first NTN apparatus may be a satellite or a chip (or a chip system) in the satellite. For another example, the first NTN apparatus may be a gateway (or referred to as a ground station, an earth station, a satellite gateway station, or a gateway station) or a chip (or a chip system) in the gateway. For another example, the first NTN apparatus may be an access network device (an access network device deployed on a satellite or the ground) or a chip (or a chip system) in the access network device.

In this solution, the first NTN apparatus sends the first configuration information, where the first configuration information includes information indicating a first resource. The first NTN apparatus receives the first signal on the first resource. The first NTN apparatus determines, based on a received power value corresponding to the first resource, a quantity of terminal apparatuses having a random access requirement.

The quantity of terminal apparatuses having the random access requirement has a plurality of usages. For example, the quantity of terminal apparatuses having the random access requirement can be used for resource configuration (for example, used for determining a quantity of allocated resources used for random access). In this way, the quantity of allocated resources can be configured more reasonably, thereby saving resources.

In a possible implementation, the first resource is associated with a first SSB. The first NTN apparatus determines, based on the received power value corresponding to the first resource, a quantity of terminal apparatuses that have the random access requirement and that are in a region associated with the first SSB. For related content and beneficial effects, refer to related descriptions of possible implementations of the first aspect. Details are not described again.

In a possible implementation, the first NTN apparatus sends second configuration information, where the second configuration information indicates a second resource, the second resource is used for perform random access by a terminal apparatus that is in the region associated with the first SSB, and the second resource is determined based on the quantity of terminal apparatuses that have the random access requirement and that are in the region associated with the first SSB. The first NTN apparatus receives a second preamble sequence on a resource in the second resource, where the second preamble sequence is used for random access. For related content and beneficial effects, refer to related descriptions of possible implementations of the first aspect. Details are not described again.

For related content and beneficial effects of the first resource, the first signal, and the first configuration information, refer to related descriptions of possible implementations of the first aspect. Details are not described again.

According to a third aspect, an embodiment of this application provides a communication method. The method may be performed by a first NTN apparatus. The first NTN apparatus in embodiments of this application may be a network device (or an NTN device), or may be a chip (or a chip system) inside the network device (or the NTN device). For example, the first NTN apparatus may be a satellite or a chip (or a chip system) in the satellite. For another example, the first NTN apparatus may be a gateway (or referred to as a ground station, an earth station, a satellite gateway station, or a gateway station) or a chip (or a chip system) in the gateway. For another example, the first NTN apparatus may be an access network device (an access network device deployed on a satellite or the ground) or a chip (or a chip system) in the access network device.

In this solution, the first NTN apparatus obtains the quantity of terminal apparatuses having the random access requirement. The first NTN apparatus sends first indication information, where the first indication information indicates the quantity of terminal apparatuses having the random access requirement. For a same region, for example, a region associated with the first SSB, when inter-satellite switching occurs in the region, where for example, the first NTN apparatus originally provides a service for the region, and now a second NTN apparatus provides a service for the region, the first NTN apparatus may send, to the second NTN apparatus, information about a quantity of terminal apparatuses that have the random access requirement and that are in the region, so that the second NTN apparatus can be prevented from repeatedly performing a solution of determining the quantity of terminal apparatuses having the random access requirement. Therefore, power consumption of the second NTN apparatus can be reduced.

For a manner in which the first NTN apparatus obtains the quantity of terminal apparatuses having the random access requirement, refer to related descriptions of the second aspect and the possible implementations of the second aspect. Details are not described again.

In a possible implementation, the first indication information further includes information about a coverage area of the region associated with the first SSB, where the first indication information indicates the quantity of terminal apparatuses that have the random access requirement and that are in the region associated with the first SSB. In this way, the first NTN apparatus may determine, based on the first indication information, a quantity of terminal apparatuses that have the random access requirement and that are in a region, and then allocate a resource (for example, a random access resource) at a region granularity.

In a possible implementation, the first indication information further includes validity period information of the quantity of terminal apparatuses having the random access requirement. When the information that is about the quantity of terminal apparatuses having the random access requirement and that is indicated by the first indication information is within a validity period, the second NTN apparatus can allocate, by using the information, a resource used for random access. After the information that is about the quantity of terminal apparatuses having the random access requirement and that is indicated by the first indication information is invalid (or after the validity period expires). The second NTN device cannot use the information to allocate the resource used for random access. In this way, the quantity of terminal apparatuses having the random access requirement can be matched with an actual situation.

According to a fourth aspect, an embodiment of this application provides a communication method. The method may be performed by a second NTN apparatus. The second NTN apparatus in embodiments of this application may be a network device (or an NTN device), or may be a chip (or a chip system) inside the network device (or the NTN device). For example, the second NTN apparatus may be a satellite or a chip (or a chip system) in the satellite. For another example, the second NTN apparatus may be a gateway (or referred to as a ground station, an earth station, a satellite gateway station, or a gateway station) or a chip (or a chip system) in the gateway. For another example, the second NTN apparatus may be an access network device (an access network device deployed on a satellite or the ground) or a chip (or a chip system) in the access network device.

The second NTN apparatus receives first indication information. The first indication information indicates a quantity of terminal apparatuses that have a random access requirement and that are in a region associated with a first SSB. The second NTN apparatus configures, based on the quantity of terminal apparatuses that have the random access requirement and that are in the region associated with the first SSB, a resource used by the terminal apparatus to perform random access.

For a same region, for example, a region associated with the first SSB, when inter-satellite switching occurs in the region, where for example, a first NTN apparatus originally provides a service for the region, and now the second NTN apparatus provides a service for the region, the first NTN apparatus may send, to the second NTN apparatus, information about a quantity of terminal apparatuses that have the random access requirement and that are in the region, so that the second NTN apparatus can be prevented from repeatedly performing a solution of determining the quantity of terminal apparatuses having the random access requirement. Therefore, power consumption of the second NTN apparatus can be reduced.

For related content and beneficial effects of the first indication information, refer to related descriptions of possible implementations of the third aspect. Details are not described again.

According to a fifth aspect, a communication apparatus is provided. The communication apparatus may be the foregoing terminal apparatus, the first NTN apparatus, or the second NTN apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus may further include modules that may be configured to perform any one of the first aspect to the fourth aspect, or perform any one of the possible implementations of the first aspect to the fourth aspect.

According to a sixth aspect, a communication apparatus is provided. The communication apparatus may be the foregoing terminal apparatus, the first NTN apparatus, or the second NTN apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the foregoing terminal apparatus, the first NTN apparatus, or the second NTN apparatus. The communication apparatus may include a processor, to perform any one of the first aspect to the fourth aspect, or perform any one of the possible implementations of the first aspect to the fourth aspect. For example, the processor is configured to perform any one of the first aspect to the fourth aspect or any one of the possible implementations of the first aspect to the fourth aspect by using a logic circuit or by executing the computer program or instructions in the memory. The processor is coupled to the memory. Optionally, the communication apparatus further includes the memory. Optionally, the communication apparatus further includes a communication interface, and the processor is coupled to the communication interface.

In an implementation, when the communication apparatus is the terminal apparatus, the first NTN apparatus or the second NTN apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a system is provided. The system includes the foregoing terminal apparatus.

In a possible implementation, the system may further include a first NTN apparatus. In a possible implementation, the system may further include a second NTN apparatus.

According to a ninth aspect, a computer program product is provided. The computer program product includes a computer program (which may also be referred to as code or instructions). When the computer program is run, a computer is caused to perform any one of the first aspect to the fourth aspect, or perform any one of the possible implementations of the first aspect to the fourth aspect.

According to a tenth aspect, a computer-readable storage medium is provided. The computer-readable medium stores a computer program (which may also be referred to as code or instructions). When the computer program is run on a computer, the computer is caused to perform any one of the first aspect to the fourth aspect, or perform any one of the possible implementations of the first aspect to the fourth aspect.

According to an eleventh aspect, a processing apparatus is provided and includes an interface circuit and a processing circuit. The interface circuit may include an input circuit and an output circuit. The processing circuit is configured to receive a signal through the input circuit, and transmit a signal through the output circuit, so that any one of the first aspect to the fourth aspect or any one of the possible implementations of the first aspect to the fourth aspect is performed.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a terminal apparatus, a first NTN apparatus, or a second NTN apparatus, the interface circuit may be a radio frequency processing chip in the terminal apparatus, the first NTN apparatus, or the second NTN apparatus, and the processing circuit may be a baseband processing chip in the terminal apparatus, the first NTN apparatus, or the second NTN apparatus.

In another implementation, the communication apparatus may be a part of devices in the terminal apparatus, the first NTN apparatus, or the second NTN apparatus, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a diagram of a beam coverage region of a network apparatus;
FIG. 2A is a diagram of a network architecture of a possible communication system to which an embodiment of this application is applicable;
FIG. 2B is a diagram of a network architecture of another possible communication system to which an embodiment of this application is applicable;
FIG. 3 is a possible schematic flowchart of a possible communication method according to an embodiment of this application;
FIG. 4 is a possible diagram of an association relationship between an SSB and a resource according to an embodiment of this application;
FIG. 5A is a possible simulation diagram of received power values, corresponding to a first resource, for different quantities of terminal apparatuses according to an embodiment of this application;
FIG. 5B is another possible simulation diagram of received power values, corresponding to a first resource, for different quantities of terminal apparatuses according to an embodiment of this application;
FIG. 6 is a possible schematic flowchart of a possible communication method according to an embodiment of this application;
FIG. 7 is a diagram of a possible structure of a communication apparatus according to an embodiment of this application; and
FIG. 8 is a diagram of a possible structure of another communication apparatus according to an embodiment of this application.

### DESCRIPTION OF EMBODIMENTS

The following describes terms and nouns used in embodiments of this application.

### (1) Resource

A resource (for example, a first resource or a second resource subsequently involved) in embodiments of this application may include, for example, at least one of a time domain resource or a frequency domain resource.

The time domain resource may include at least one of a radio frame, a subframe, a slot (slot), a mini slot (mini slot), or an orthogonal frequency division multiplexing (orthogonal frequency division multiplexing, OFDM) symbol (symbol). One radio frame may include a plurality of subframes, one subframe may include one or more slots, and one slot may include at least one symbol. Alternatively, one radio frame may include a plurality of slots, and one slot may include at least one symbol. It should be noted that, in embodiments of this application, one OFDM symbol may also be referred to as one symbol for short.

The frequency domain resource may include at least one of a resource element (resource element, RE), a resource block (resources block, RB), a channel, a sub channel (sub channel), a carrier (carrier), or a bandwidth part (BWP, bandwidth part). In embodiments of this application, a channel may alternatively be equivalently replaced with a resource block set (resource block set, RB set), and a frequency domain bandwidth of an RB set may be 20 megahertz (megahertz, MHz).

### (2) SSB

A synchronization signal (synchronization signal block, SS) is usually sent together with a master information block (main information block, MIB) on a physical broadcast channel block (physical broadcast channel, PBCH) to form an SS/PBCH block. An SSB described below in embodiments of this application may be the SS/PBCH block (SS/PBCH block). The synchronization signal may be used by a terminal to perform downlink synchronization and obtain an identity (identity, ID) of a cell. The downlink synchronization may include frequency synchronization and time synchronization. The PBCH may be used by the terminal to obtain information about an accessed cell.

### (3) Relationship between an SSB and a beam

A network apparatus (for example, a first NTN apparatus or a second NTN apparatus) may use a plurality of antennas to enhance coverage. However, using the plurality of antennas causes antenna radiation to form a very narrow beam, and it is difficult for a single narrow beam to cover an entire cell. In addition, due to a hardware limitation, the network apparatus usually cannot simultaneously send a signal through a plurality of beams to cover the entire cell. Therefore, a beam sweeping technology is introduced into a communication system, that is, an access network device may send a signal through different beams at different moments. Therefore, a beam sweeping method is introduced into the communication system to cover the entire cell. To be specific, a network device may cover one part of a region of the cell at a moment through a part of beams, and then cover the other one part of the region of the cell at another moment through another part of beams.

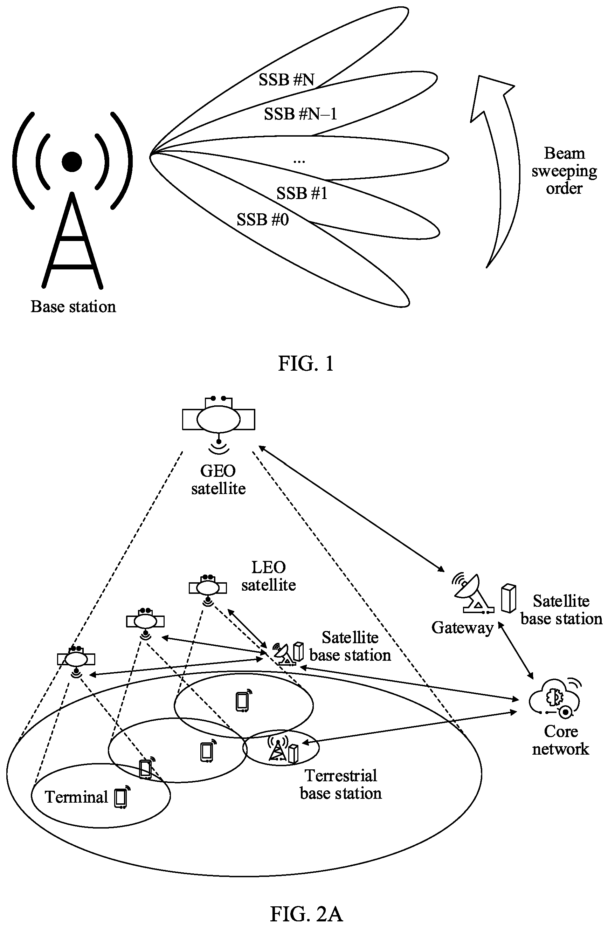

Refer to FIG. 1. A network apparatus (for example, a first NTN apparatus or a second NTN apparatus) sends a beam in a direction at a moment, and sends beams in different directions at a plurality of moments to cover an entire cell. Specifically, the network apparatus (for example, the first NTN apparatus) covers the entire cell through a beam 0 (used for sending an SSB #0), a beam 1 (used for sending an SSB #1), ..., a beam N-1 (used for sending an SSB #N-1), and a beam N (used for sending an SSB #N). It can be learned that directions of any two beams may be different, and SSB indexes corresponding to two SSBs sent through any two beams are also different.

### (4) Beam

In a new radio (new radio, NR) protocol, the beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (transmission configuration indicator state, TCI-state) parameter or a spatial relation parameter.

Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (a downlink TCI-state and an uplink TCI-state), the spatial relation, or the like. The foregoing terms are also equivalent to each other. Alternatively, the beam may be replaced with another term for representing a beam. This is not limited in this application.

A beam used for sending a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used for receiving a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation, an uplink TCI-state, or an SRS resource (which indicates that a transmission beam of an SRS is used). Therefore, the uplink beam may alternatively be replaced with the SRS resource.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (Downlink control information, DCI).

Optionally, a plurality of beams having same or similar communication features are considered as one beam. One beam may include one or more antenna ports, and the antenna port is configured to transmit a data channel, a control channel, a sounding signal, and the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of the resource may uniquely identify a beam corresponding to the resource.

### (4.1) TCI-state (indicating a downlink beam)

A network device may generate different beams that point to different transmission directions. In downlink data transmission, when sending data to a terminal device by using a specified beam, the network device needs to notify a terminal device of information about a transmission beam used by the network device. In this way, the terminal device can receive, by using a reception beam corresponding to the transmission beam, the data sent by the network device.

In a 3GPP R15/R16 protocol, the network device indicates, to the terminal device by using a TCI field in DCI, related information of a transmission beam used by the terminal device. Specifically, a size of the TCI field is three bits, and may specifically indicate eight different field values (codepoint). Each value of the TCI field corresponds to one TCI-state index, and the TCI-state index may uniquely identify one TCI-state. The TCI-state in embodiments of this application may also be written as a TCI state. The TCI-state includes a plurality of parameters, and related information of the transmission beam may be determined by using these parameters. The TCI-state is configured by the network device for each terminal device. Each TCI-state includes an index TCI-state identifier of the TCI-state and two pieces of QCL information (QCL information, QCL-Info). Each piece of QCL-Info includes one cell field and one bwp-Id, respectively indicating a specific bwp (Bandwidth part) of a specific cell (cell) to which the TCI-state is applied, that is, different QCL-Info may be configured for different bwps of different cells or a same cell. The QCL-Info further includes one referenceSignal (reference signal), indicating a specific reference signal resource with which a QCL (quasi-co-location, quasi-co-location) relationship is formed.

In an R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, forming a QCL relationship with which reference signal resource herein is essentially forming a QCL relationship with which beam. The QCL relationship means that two reference signal resources (or two antenna ports, where antenna ports are also in one-to-one correspondence with reference signal resources) have some same spatial parameters. Specifically, specific spatial parameters that are the same depends on a type of the QCL-Info, namely, another field qcl-Type of the QCL-Info. qcl-Type may have four values {typeA, typeB, typeC, typeD}. typeD is used as an example. typeD indicates that the two reference signal resources have same spatial reception parameter information. That is, two beams have a same reception beam. A maximum of one of the two pieces of QCL-Info included in the TCI-state can be of TypeD.

### (4.2) Spatial relation (spatial relation) (indicating an uplink beam)

In a current protocol, a transmission beam for uplink transmission is indicated by using the spatial relation, a function of the spatial relation is similar to that of the TCI-state, and is used for notifying a terminal device of a specific transmission beam to be used for uplink transmission.

The spatial relation also needs to be first configured by using radio resource control (radio resource control, RRC) signaling. The RRC signaling may include an id of the spatial relation, a cell id, a target reference signal resource, a path loss measurement reference signal, a power control parameter, or the like. The target reference signal resource (which may be one of a sounding reference signal (sounding reference signal, SRS)/SSB/channel state information reference signal (channel status information reference signal, CSI-RS)) indicates a corresponding uplink beam. If a spatial relation #1 is used for uplink transmission, and the spatial relation #1 includes one target reference signal resource #2, it indicates that a transmission beam used for uplink transmission is a transmission/reception beam of the target reference signal. For example, when the target reference signal resource is an uplink resource SRS, it indicates that the transmission beam used for uplink transmission is a transmission beam of the SRS (where the transmission beam of the SRS is known). For another example, when the target reference signal resource is a downlink resource such as an SSB/a CSI-RS, it indicates that the transmission beam used for uplink transmission is a reception beam of the SSB/the CSI-RS (where the reception beam of the SSB/CSI-RS is known).

The network device may configure a plurality of spatial relations for the terminal device. Then, one of the spatial relations is activated through a media access control typed element (media access control typed element, MAC CE) for corresponding data transmission. Uplink transmission includes a physical uplink control channel (physical uplink control channel, PUCCH), an SRS, a physical uplink shared channel (physical uplink shared channel, PUSCH), and the like, and all of which require corresponding spatial relations. The spatial relation of the PUCCH is indicated by using MAC CE signaling. The spatial relation of the SRS is also indicated by using the MAC CE signaling. During PUSCH transmission, a specific SRS is associated, and transmission is performed by using the spatial relation of the SRS.

### (5) Region

Region: Unless otherwise specified, a "region" in the following embodiments of this application refers to a geographical region. The region is fixed relative to the earth, or this is understood as that the region refers to a geographical region that is fixed relative to the earth. For example, the region may have at least one of the following attributes: a shape, a contour, a size, a radius, an area, a geographical location, and the like.

The "region" may further have a height attribute, that is, the region may be understood as a geographical region with a given height or within a given height range. By default, the region may be a geographical region with an altitude of 0 kilometers (km) or about 0 km (for example, within a range of [-2, 2] km) on the ground, or a geographical region with an average altitude. In addition, the region may alternatively be another geographical region with a specific height or within a specific height range, for example, a geographical region with an altitude of 10 km, or a geographical region with an altitude of about 10 km (for example, within a range of [7, 13] km).

In a possible implementation, the region fixed relative to the earth may also be referred to as a "beam position", a "geographical region", or the like. Certainly, the region may have another name. A name of the region fixed relative to the earth is not specifically limited in this application.

Shapes, contours, sizes, radii, and areas of different regions may be the same or may be different. Different regions have different geographical locations. Different regions may overlap or may not overlap.

In a possible implementation, that the region is fixed relative to the earth may be understood as that a contour, a size, or a geographical location of the region remains unchanged. For example, the contour, the size, or the geographical location of the region does not change with time. Alternatively, that the region is fixed relative to the earth may be understood as that a contour of the region and points in the region may be described by using an earth-fixed axis system, or coordinates of the points in the contour of the region in the earth-fixed axis system remain unchanged.

In a possible implementation, a shape of the region may be a regular hexagon, or another shape like a regular pentagon, a circle, or an ellipse. Alternatively, a shape of the region may be an irregular shape. This is not limited.

For example, the shape of the region may be defined in a protocol, or may be defined by a network device. Shapes of regions defined by different network devices may be the same or may be different. Shapes of a plurality of regions may also be defined by a same network device. Similarly, the size, the radius, and the area of the region may alternatively be defined in a protocol, or may be defined by the network device. Sizes, radii, and areas of regions defined by different network devices may be the same or may be different. Sizes of a plurality of regions, radii of a plurality of regions, or areas of a plurality of regions may alternatively be defined by a same network device.

In a possible implementation, the earth surface may be divided into a plurality of regions, and the plurality of regions are indexed (for example, numbered). A terminal device and the network device may agree on a numbering manner (for example, numbering from 1 or numbering from 0) of these regions and a correspondence between a region and an index. Alternatively, a protocol may define a numbering manner of these regions and a correspondence between a region and an index. Information such as a geographical location of a region may be determined based on an index of the region.

Optionally, the plurality of regions obtained through division may completely cover the earth surface, for example, any location on the earth surface belongs to a region; or the plurality of regions obtained through division may cover a part of the geographical location on the earth, for example, the plurality of regions may not cover the south pole and/or the north pole of the earth, that is, the region may not exist in the south pole and/or the north pole.

Optionally, a manner of obtaining the plurality of regions through division may be defined in a protocol, or may be defined by the network device. Division manners defined by different network devices may be the same or may be different. A plurality of division manners may also be defined by a same network device.

In a first possible division manner, the earth surface may be divided by using a longitude and latitude grid with one granularity. For example, the earth surface may be divided by using a longitude and latitude grid with a granularity of 1 degree. If only such a discrete manner is used, the world may be divided into 360 × 360 = 129600 regions, and the terminal device and the network device may agree on indexes of the 129600 regions as 0, 1,..., 129599, or 1, 2,..., 129600.

Optionally, after a height attribute of a geographical region is introduced, a plurality of grids may be defined to divide the earth surface. For example, at a grid at an altitude of 0 km or within a range of [-2, 2] km, the earth surface may be divided by using the longitude and latitude grid with the granularity of 1 degree, to generate 129600 regions. At an altitude of 10 km or within an altitude range of [7, 13] km, the longitude and latitude grid with the granularity of 1 degree is used for division to generate 129600 regions. When these regions are indexed, an index range needs to be extended. For example, total indexes are 0, 1,..., 129599, 129600, 129601, ..., 259199, where first 129600 sequence numbers indicate indexes of regions at the altitude of 0 km or within the altitude range of [-2, 2] km, and last 129600 sequence numbers indicate indexes of regions at the altitude of 10 km or within the altitude range of [7, 13] km.

For example, the granularity of the longitude and latitude grid may be determined based on a type of the network device. For example, when the network device is an LEO satellite, a small granularity may be used for discretization; or when the network device is a geostationary earth orbit (geostationary earth orbit, GEO) satellite, a large granularity may be used for discretization.

In a second possible division manner, the earth surface may be divided by using longitude and latitude grids with a plurality of granularities. For example, a part of the earth surface or a part of an administrative region is divided by using the longitude and latitude grid with the granularity of 1 degree, and another part of the earth surface or another part of the administrative region is divided by using a longitude and latitude grid with a granularity of 2 degrees.

Alternatively, after the height attribute of the geographical region is introduced, the earth surface may be divided by using the longitude and latitude grid with the granularity of 1 degree at an altitude of 0 km, and the earth surface may be divided by using a longitude and latitude grid with a granularity of 2 degrees at an altitude of 10 km.

In a third possible division manner, the earth surface may be divided based on administrative regions. For example, a rural administrative region is considered as a region.

In a fourth possible division manner, for a GEO satellite, projection of a beam of the GEO satellite on the ground may be considered as a region. Because the GEO satellite is stationary relative to the earth, it may be considered that the projection of the beam of the GEO satellite on the ground is fixed relative to the earth.

In actual application, the earth surface may be divided in a plurality of division manners. For example, a part of the earth surface or a part of the administrative region is divided by using the longitude and latitude grid with the granularity of 1 degree, and another part of the earth surface or another part of the administrative region is divided based on the administrative region.

In a possible implementation, when the earth surface is divided into a plurality of regions, different levels of region division may be performed on a same surface range. For example, for a surface range, first-level region division may be performed by using a longitude and latitude grid with a granularity of 10 degrees, second-level region division may be performed by using a longitude and latitude grid with a granularity of 6 degrees, and third-level region division may be performed by using a longitude and latitude grid with a granularity of 1 degree. In this case, in the surface range, a quantity of regions at a first level is greater than a quantity of regions at a second level, and the quantity of regions at the second level is greater than a quantity of regions at a third level. In addition, in this scenario, regions at each level may be separately numbered.

### (6) Random access

Before accessing a network, a terminal device needs to perform cell search. For example, when the terminal is powered off and then powered on, cell search may be performed. A purpose of the cell search is to cause the terminal to obtain time synchronization and frequency synchronization of a system, so that the terminal can read system information (for example, information about a cell to be accessed, a system bandwidth, and other cell broadcast information) and perform subsequent data transmission.

Then, a terminal apparatus may perform random access. The random access is a process that is initiated by the terminal, to implement uplink synchronization between the terminal and an access network device, after downlink synchronization is implemented between the terminal and the access network device. The random access may be classified into contention-based (contention-based) random access (which may also be referred to as 4-step random access) and contention-free (contention-free) random access (which may also be referred to as 2-step random access).

### (7) Resource used for random access

A random access request is transmitted on a physical random access channel occasion (physical random access channel occasion, RO). One RO is understood as a random access resource. A terminal device may send a random access preamble (random access preamble) sequence on a specific RO (that is, on a specific time-frequency resource). A random access preamble (random access preamble) sequence may also be referred to as a preamble, a random access preamble, a preamble sequence, or the like. A format of the RO may correspond to a format of the preamble sequence.

In an existing standard (3GPP TS38.331), configuration information of the RO and the preamble sequence used for random access is indicated by using a system message, for example, may be configured by using random access channel (random access channel, RACH)-ConfigCommon. For example, a parameter rach-ConfigGeneric in the RACH-ConfigCommon indicates physical random access channel (physical random access channel, PRACH) sequence generation-related information, and the PRACH sequence generation-related information may include, for example, information such as a root indication, a quantity of FDM (a quantity of frequency domain ROs), and a frequency domain position. The RACH-ConfigCommon may further include information such as an association relationship between an SSB and the RO.

The technical solutions in embodiments of this application may be applied to various communication systems, for example, a terrestrial communication system and an NTN communication system like a satellite communication system. The satellite communication system may be integrated with a mobile communication system. For example, the mobile communication system may be a 4th generation (4th Generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), and a future mobile communication system. The mobile communication system may alternatively be a vehicle-to-everything (vehicle-to-everything, V2X) system or an internet of things (internet of things, IoT) system.

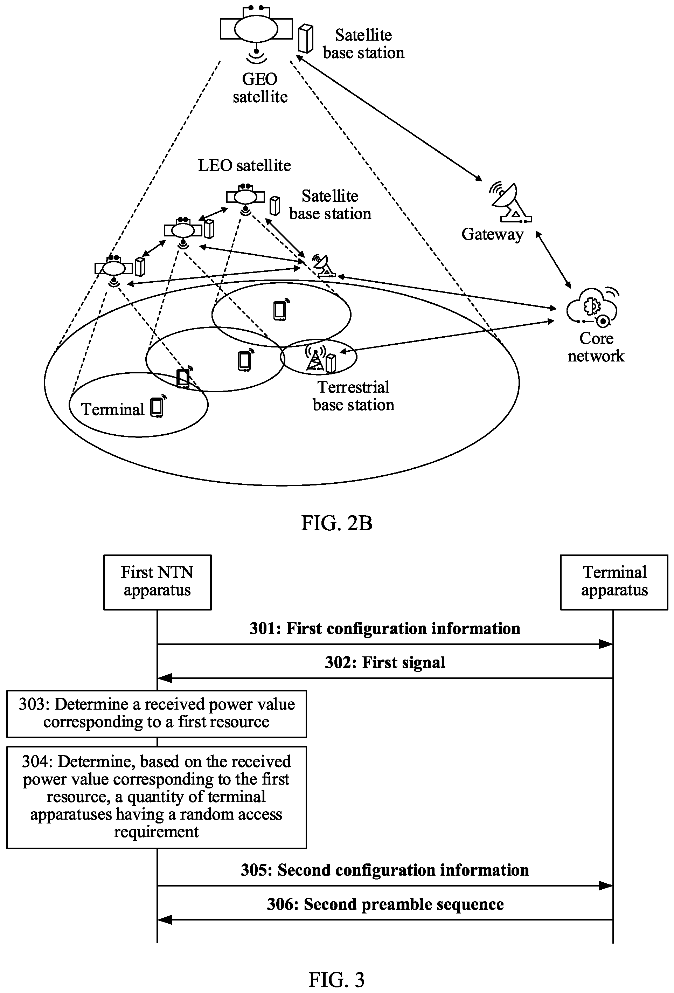

FIG. 2A and FIG. 2B are examples of diagrams of network architectures of several communication systems to which embodiments of this application are applicable. The communication system may include a network device, a terminal device, and the like. The network device may include one or more of a satellite, a gateway, an access network device, and a core network (core network, CN) device. FIG. 2A and FIG. 2B show examples of integrated network architectures of an NTN and a terrestrial network. The following provides descriptions with reference to the accompanying drawings.

### (1) Satellite

The satellite may be a highly elliptical orbit (highly elliptical orbit, HEO) satellite, a GEO satellite, a medium earth orbit (medium earth orbit, MEO) satellite, and a low-earth orbit (low-earth orbit, LEO) satellite. An operating mode of the satellite is not limited in embodiments of this application. For example, the operating mode of the satellite may be a transparent (transparent) mode, or may be a regenerative (regenerative) mode. FIG. 2A is shown by using an example in which the operating mode of the satellite is the transparent mode, and FIG. 2B is shown by using an example in which the operating mode of the satellite is the regenerative mode.

When the satellite operates in the transparent (transparent) mode, the satellite has a relay and forwarding function. The gateway has a function of a network device (for example, a base station) or some functions of a network device (for example, a base station). In this case, the gateway may be considered as the network device (for example, the base station). Alternatively, the network device (for example, the base station) and the gateway may be separately deployed. In this case, a feeder link delay includes two parts: a delay from the satellite to the gateway and a delay from the gateway to a gNB. In the transparent mode discussed below, a case in which the gateway and the gNB are located together or close to each other is used as an example. If the gateway is far away from the gNB, the delay from the satellite to the gateway and the delay from the gateway to the gNB are added to obtain the feeder link delay.

When the satellite operates in the regenerative (regenerative) mode, the satellite has a data processing capability, and has a function of the network device (for example, the base station) or some functions of the network device (for example, the base station). In this case, the satellite may be considered as the network device (for example, the base station).

The satellite may perform wireless communication with a terminal device through a broadcast communication signal, a navigation signal, and the like. Optionally, each satellite may provide a communication service, a navigation service, a positioning service, and the like for a terminal device through a plurality of beams. For example, each satellite uses a plurality of beams to cover a service region, and a relationship between different beams may be one or more of time division, frequency division, and space division. In addition, the satellite may further operate in a quasi earth-fixed (quasi earth-fixed) mode or a satellite-fixed (satellite-fixed) mode.

The quasi earth-fixed mode may also be referred to as a gaze mode, and means that a beam direction of a satellite is dynamically adjusted, so that the satellite continuously serves a physical region in a time period. For example, within a time period (for example, a moment t0, a moment t1, and a moment t2), the satellite dynamically adjusts a beam direction, so that a beam approximately covers a same region on the ground. In practice, due to a problem of precision of a beam direction and a problem of distortion of beam projection at different incident angles on the ground, a coverage region of a gazing beam may have a jitter to some extent in terms of time.

In the satellite-fixed mode, a beam of a satellite moves with the satellite, and a physical region served by the satellite also changes continuously. For example, within a time period (for example, a moment t0, a moment t1, and a moment t2), a coverage area of a satellite beam moves with the satellite.

### (2) Gateway

The gateway (or referred to as a ground station, an earth station, a satellite gateway station, or a gateway station) (gateway) may be configured to connect a satellite to a terrestrial network device (for example, a terrestrial base station). One or more satellites may be connected to one or more terrestrial network devices (for example, terrestrial base stations) through one or more gateways. This is not limited herein.

A link between the satellite and a terminal is referred to as a service link (service link), and a link between the satellite and the gateway is referred to as a feeder link (feeder link). A network device and the gateway may be separately deployed. In this case, a feeder link delay may include two parts: a delay from the satellite to the gateway and a delay from the gateway to the network device.

### (3). Access network device

The access network device in embodiments of this application may be deployed on a satellite, or may be deployed on the ground (for example, a terrestrial base station or a ground station).

The access network device in embodiments of this application may be a radio access network (radio access network, RAN) node. The RAN may be an evolved universal terrestrial radio access (evolved universal terrestrial radio access, E-UTRA) system, an NR system, and a future radio access system defined in a 3rd generation partnership project (3rd generation partnership project, 3GPP). The RAN may alternatively include the foregoing two or more different radio access systems. The RAN may alternatively be an open RAN (open RAN, O-RAN).

The RAN node, also referred to as a radio access network device, a RAN entity, or an access node, and is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, or a base station in a future mobile communication system. The RAN node may be a macro base station, or may be a micro base station or an indoor base station, or may be a relay node or a donor node.

In another application scenario, a plurality of RAN nodes may cooperate to help the terminal implement radio access, and different RAN nodes respectively implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a media access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as the RAN node.

### (4) Core network (core network, CN) device

The core network device is a device that is disposed on the ground and can communicate with an NTN device in an NTN system. The CN device is a network element included in a CN part in a mobile communication system. The CN device can connect a terminal device to different data networks, and perform services such as authentication, charging, mobility management, session management, policy control, and user plane forwarding. The CN device may be a CN device in a current mobile communication system (for example, a 5th generation (5th generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4th generation (4th generation, 4G) mobile communication system (namely, long term evolution (long term evolution, LTE)), a network element responsible for functions such as access control, security control, and signaling coordination is a mobility management entity (mobility management entity, MME), a network element used as a local mobility management anchor is a serving gateway (serving gateway, S-GW), a network element used as a handover anchor of an external data network and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging rules function (policy and charging rules function, PCRF) network element.

For another example, in a 5G mobile communication system, based on specific logical function division, a core network may be divided into a control plane (control plane, CP) and a user plane (user plane, UP). In the CN, a network element responsible for a control plane function may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for functions such as subscription data management and user access authorization is referred to as a unified data management (unified data management, UDM) network element, a network element responsible for charging and policy control functions is referred to as a policy control function (Policy and charging function, PCF) network element, and a network element responsible for transmitting a requirement of an application side for a network side is an application function (application function, AF) network element.

### (5) Terminal

The terminal is a device having a wireless transceiver function, and may send a signal to a base station or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter (or an uncrewed aerial vehicle) may be configured as a mobile base station. For a terminal that accesses a radio access network by using a helicopter (or an uncrewed aerial vehicle), the helicopter (or the uncrewed aerial vehicle) is a base station. However, for the base station, the helicopter (or the uncrewed aerial vehicle) is a terminal, that is, the base station communicates with the helicopter (or the uncrewed aerial vehicle) by using a radio interface protocol. Certainly, the base station may alternatively communicate with the helicopter (or the uncrewed aerial vehicle) by using an interface protocol between the base stations. In this case, the helicopter (or the uncrewed aerial vehicle) is also a base station relative to the base station. Therefore, both the base station and the terminal may be collectively referred to as communication apparatuses. The network apparatus in embodiments of this application may be referred to as a communication apparatus having a base station function, and the terminal apparatus in embodiments of this application may be referred to as a communication apparatus having a terminal function.

Embodiments of this application are also applicable to another communication system architecture, for example, an air to ground (air to ground, ATG) communication system. The communication system includes at least one network device and at least one high-altitude terminal. The high-altitude terminal includes, for example, a high-altitude aircraft and an on-board terminal. The satellite in FIG. 2A and FIG. 2B may alternatively be replaced with another relay device, for example, may be replaced with another NTN device like a high altitude platform station (high altitude platform station, HAPS). The communication system shown in FIG. 2A or FIG. 2B is used as an example, and constitutes no limitation on a communication system to which the method provided in embodiments of this application is applicable.

Based on content shown in FIG. 1, FIG. 2A, and FIG. 2B, and the foregoing other content, FIG. 3 is an example of a possible schematic flowchart of a communication method according to an embodiment of this application. For ease of understanding, interaction between a first NTN apparatus and a terminal apparatus is used as an example in FIG. 3 for description. For example, the first NTN apparatus may be a satellite or a chip (or a chip system) in the satellite in FIG. 2A or FIG. 2B. For another example, the first NTN apparatus may be a gateway (or referred to as a ground station, an earth station, a satellite gateway station, or a gateway station) or a chip (or a chip system) in the gateway in FIG. 2A or FIG. 2B. For another example, the first NTN apparatus may be an access network device (an access network device deployed on a satellite or the ground) or a chip (or a chip system) in the access network device in FIG. 2A or FIG. 2B. The first NTN apparatus is a network device in a communication architecture including an NTN, and the first NTN apparatus may alternatively be replaced with a network apparatus. Alternatively, when the solution provided in embodiments of this application is applicable to another communication architecture, the first NTN apparatus may alternatively be replaced with a name of an apparatus in the another communication architecture. The terminal apparatus in embodiments of this application may be a terminal or a chip system in the terminal in FIG. 2A or FIG. 2B.

The following provides descriptions with reference to FIG. 3.

Step 301: The first NTN apparatus sends first configuration information.

The terminal apparatus receives the first configuration information.

In embodiments of this application, the first configuration information may include one or more of items of information (information A1) indicating a first resource, information (information A2) indicating a power value, and information (information A3) indicating a first signal. The following separately provides descriptions.

The information A1 is the information indicating the first resource.

The information indicating the first resource may include, for example, a resource identifier and/or a resource set identifier of the first resource.

In a possible implementation, a coverage area of the first NTN apparatus may include at least one terminal apparatus. The first NTN apparatus may configure a resource (for example, the first resource) for the at least one terminal apparatus. The at least one terminal apparatus may transmit a signal on the resource (for example, the first resource). A received power value corresponding to a signal that is from the at least one terminal apparatus and that is transmitted on the resource (for example, the first resource) may have a plurality of usages. For example, the received power value may be used for determining a quantity of terminal apparatuses having a random access requirement. The resource may also have another name, for example, may be referred to as an RO_forCollect resource. The quantity of terminal apparatuses having the random access requirement can be used for resource configuration (for example, used for determining a quantity of allocated resources used for random access). In this way, the quantity of allocated resources can be configured more reasonably, thereby saving resources.

In another possible implementation, the coverage area of the first NTN apparatus may be divided into a plurality of regions. For example, the coverage area of the first NTN apparatus is divided into a plurality of regions based on some parameters. For example, the coverage area of the first NTN apparatus may be divided into regions based on SSBs. For example, one SSB of the first NTN apparatus is associated with one region. In a possible implementation, one SSB is associated with one beam, and this may also be understood as that the coverage area of the first NTN apparatus may be divided into regions based on beams, where for example, a coverage area of one beam of the first NTN apparatus is classified into one region (or a plurality of SSBs are associated with one region, to be specific, coverage regions of beams associated with the plurality of SSBs are classified into one region). For example, if the first NTN apparatus configures a plurality of beams, for example, a beam #1 and a beam #2, the coverage area of the first NTN apparatus may be divided into two regions that are a region #1 and a region #2 respectively, where the region #1 is a coverage area of the beam #1, and the region #2 is a coverage area of the beam #2. The coverage area of the first NTN apparatus may alternatively be divided into regions based on another parameter. For example, in a scenario in which an SSB broadcast beam is separated from a data beam, division into regions may be alternatively performed based on data beams. For example, a coverage area of one data beam (or more data beams) is classified into one region. In this case, one SSB broadcast beam may correspond to coverage areas of one or more data beams, which may also be understood as that one SSB (SSB broadcast beam) is associated with a plurality of regions (one region is a coverage area of one or more data beams). For related definitions of the region, refer to the foregoing descriptions. For ease of understanding, an example in which division into regions is performed based on SSBs is used for description subsequently.

In embodiments of this application, the first configuration information may further include information indicating a region associated with the first resource. The information indicating the region associated with the first resource may include at least one of a beam position identifier of the region, a coverage area of the region, location information of one or more reference points in the region, a radius of a region range of the region, and the like.

An example in which one region is a region associated with one SSB is used for description. In a possible implementation, the first NTN apparatus may configure one resource for each SSB (or each region). Two resources configured for two SSBs (or two regions) may not overlap or partially overlap. For example, a resource #1 of an SSB #1 and a resource #2 of an SSB #2 do not overlap in time domain and overlap in frequency domain (or partially overlap in frequency domain), or a resource #1 of an SSB #1 and a resource #2 of an SSB #2 do not overlap in frequency domain and overlap in time domain (or partially overlap in time domain), or the resource #1 of the SSB #1 and the resource #2 of the SSB #2 do not overlap in frequency domain and do not overlap in time domain. In this embodiment of this application, an example in which the first resource is associated with a first SSB is used for description. The first resource may be understood as a resource configured by the first NTN apparatus for a region associated with the first SSB. The first resource may be used by at least one terminal apparatus that is in the region associated with the first SSB to send a signal. A received power value corresponding to the signal received by the first NTN apparatus on the first resource from the at least one terminal apparatus may be used for determining a quantity of terminal apparatuses that have the random access requirement and that are in the region associated with the first SSB.

In another possible implementation, a plurality of SSBs (or a plurality of regions) may be associated with a same resource. For example, two SSBs are both associated with the first resource. In this case, the first NTN apparatus needs to distinguish which SSB a signal received on the first resource is from, and then may determine, based on a received power value of a signal corresponding to one SSB, a quantity of terminal apparatuses that have an access requirement and that are in a region corresponding to the SSB. For example, terminal apparatuses of different SSBs may correspond to different root sequences, signals (or referred to as preamble sequences) generated by terminal apparatuses in different SSB regions, based on respective root sequences are different, and signals (or referred to as preamble sequences) sent by different SSBs on the first resource are also different. The first NTN apparatus may distinguish, based on the received preamble sequences, between SSBs corresponding to the preamble sequences.

In another possible implementation, one SSB may be associated with a plurality of resources, for example, the first SSB is associated with a resource #1 (for example, the resource #1 is a first resource) and a resource #2. In this solution, a part of terminal apparatuses in the region associated with the first SSB may send a signal on the resource #1, and another part of terminal apparatuses in the region associated with the first SSB may send a signal on the resource #2. The first NTN apparatus may separately estimate a quantity of terminal apparatuses that have an access requirement and that correspond to the resource #1 and a quantity of terminal apparatuses that have an access requirement and that correspond to the resource #2, and then use a sum of the two quantities as the quantity of terminal apparatuses that have the access requirement and that are in the region associated with the first SSB.

It can be learned from the foregoing example that the coverage area of the first NTN apparatus may be considered as one region, or the coverage area of the first NTN apparatus may be divided into at least two regions. In two regions of the first NTN apparatus, terminal density may be different, or this is understood as that quantities of terminal apparatuses having random access requirements are different. If a same quantity of resources (for example, resources used for random access) are allocated to each of the plurality of regions, quantities of resources corresponding to some regions are excessively large, causing a waste of resources. In a possible implementation provided in this embodiment of this application, the first NTN apparatus may separately estimate, for each region (the coverage area of the first NTN apparatus may include one or more regions), a quantity of terminal apparatuses that have the random access requirement and that are in the region, and then allocate a resource (for example, a resource used for random access) to the region based on the quantity of terminal apparatuses that have the random access requirement and that are in the region. For example, if a quantity of terminal apparatuses that have the random access requirement and that are in a region is small, a quantity of resources (for example, resources used for random access) configured for the region may also be small, so that resource overheads can be reduced. For another example, if a quantity of terminal apparatuses that have the random access requirement and that are in a region is large, a quantity of resources (for example, resources used for random access) configured for the region may also be large, so that a requirement of the region can be met. It can be learned that, in this solution, a resource may be separately configured for a region that is obtained by dividing the coverage area of the first NTN apparatus and that is at a smaller granularity, thereby saving resources.

In embodiments of this application, the coverage area of the first NTN apparatus may be considered as one region, or may be divided into at least two regions. The region may also be referred to as a beam position or the like. For related descriptions of the region, refer to the foregoing content. Details are not described again. A first region is a region in the coverage area of the first NTN apparatus. The first region may be considered as the region associated with the first SSB, and the first resource is associated with the first SSB (or this is understood as that the first resource belongs to a resource configured by the first NTN apparatus for the first SSB). The following uses the first region as an example for description. If the first NTN apparatus includes another region, a solution of the another region is similar to that of the first region, and details are not described again.

The first NTN apparatus may configure a corresponding resource for an RO associated with the first SSB. The first resource may belong to or not belong to the resource corresponding to the RO associated with the first SSB. The following separately provides descriptions by using Example A1.1 and Example A1.2.

Example A1.1: The first resource may belong to the resource corresponding to the RO associated with the first SSB.

In Example A1.1, the first NTN apparatus may reuse the resource corresponding to the RO to determine the quantity of terminal apparatuses having the random access requirement, so that no additional resource needs to be configured, thereby reducing resource overheads and reducing solution complexity.

For example, an RO associated with each SSB corresponds to a plurality of resources (for example, FDM), and numbers of FDM associated with each SSB start from FDM #0. In a possible implementation, the first configuration information may indicate that the FDM #0 associated with each SSB is used as a resource that corresponds to the SSB and that is used for determining the quantity of terminal apparatuses having the random access requirement, or the FDM #0 associated with each SSB is used as an RO_forCollect resource of the SSB. Resources associated with two SSBs may alternatively be different. For example, FDM #0 associated with the SSB #1 is used as an RO_forCollect resource of the SSB, and FDM #1 associated with the SSB #2 is used as an RO_forCollect resource of the SSB.

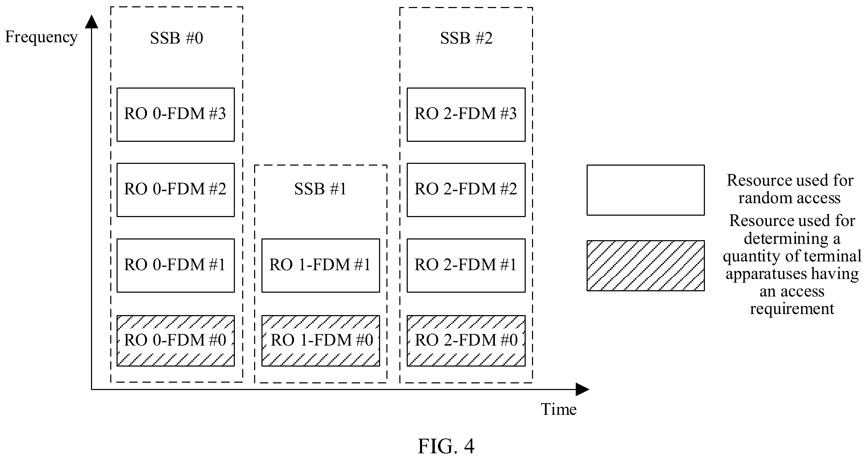

For ease of understanding, FIG. 4 shows an example of resources associated with SSBs. As shown in FIG. 4, a first NTN apparatus includes an SSB #0, an SSB #1, and an SSB #2. Resources are configured for an RO associated with each SSB. For example, an RO associated with the SSB #0 shown in FIG. 4 is an RO 0, and four resources corresponding to the RO 0 are respectively identified as RO 0-FCM #0, RO 0-FCM #1, RO 0-FCM #2, and RO 0-FCM #3 in FIG. 4. An RO associated with the SSB #1 is an RO 1, and two resources corresponding to the RO 1 are respectively identified as RO 1-FCM #0 and RO 1-FCM #1 in FIG. 4. An RO associated with the SSB #2 is an RO 2, and four resources corresponding to the RO 2 are respectively identified as RO 2-FCM #0, RO 2-FCM #1, RO 2-FCM #2, and RO 2-FCM #3 in FIG. 4. As shown in FIG. 4, FDM #0 associated with each SSB is used as a resource that corresponds to the SSB and that is used for determining a quantity of terminal apparatuses having an access requirement. The resource may also be referred to as an RO_forCollect resource. As shown in FIG. 4, the RO 0-FCM #0 is a resource that corresponds to the SSB #0 and that is used for determining a quantity of terminal apparatuses having an access requirement. A terminal apparatus in a region associated with the SSB #0 may send a signal on the RO 0-FCM #0. The first NTN apparatus may determine a received power value of a signal corresponding to the RO 0-FCM #0, and determine, based on the received power value, the quantity of terminal apparatuses that have the access requirement and that are in the region associated with the SSB #0. Similarly, the RO 1-FCM #0 is a resource that corresponds to the SSB #1 and that is used for determining a quantity of terminal apparatuses having an access requirement, and the RO 2-FCM #0 is a resource that corresponds to the SSB #2 and that is used for determining a quantity of terminal apparatuses having an access requirement. It can be learned that, in this solution, the information indicating the first resource may be index information of one resource corresponding to the RO associated with the first SSB. In this solution, a quantity of bits occupied by the information indicating the first resource can be reduced, thereby reducing signaling overheads.

Example A1.2: The first resource may not belong to the resource corresponding to the RO associated with the first SSB.

In Example A1.2, the first NTN apparatus may reconfigure a resource (the resource is the first resource). The resource is used for determining the quantity of terminal apparatuses having the random access requirement, so that the resource corresponding to the RO may not be used, thereby improving flexibility of the solution.

In a possible implementation, a time domain of the first resource completely or partially overlaps a resource corresponding to at least one RO associated with the first SSB. A frequency domain of the first resource may partially overlap or not overlap the resource corresponding to the at least one RO associated with the first SSB. For example, the time domain of the first resource completely or partially overlaps a resource #1 corresponding to an RO #1 associated with the first SSB, and the frequency domain of the first resource may partially overlap or do not overlap the resource #1.

When the time domain of the first resource completely overlaps the resource corresponding to the at least one RO associated with the first SSB, the information indicating the first resource may not include a large amount of indication information of time domain resources. This may also be understood as that the first NTN apparatus may not need to use a large quantity of bits to indicate a time domain resource of the first resource. For example, it may be determined, in a protocol definition manner or through negotiation, that the time domain resource of the first resource completely overlaps a time domain resource of the resource #1 corresponding to the RO #1. In this way, a quantity of bits occupied by the information indicating the first resource can be reduced, thereby reducing signaling overheads. In addition, in this solution, the first NTN apparatus may simultaneously receive a signal on the first resource and a signal on the resource corresponding to the RO, thereby reducing scheduling complexity of the first NTN apparatus.

In another possible implementation, a frequency domain of the first resource completely or partially overlaps a resource corresponding to at least one RO associated with the first SSB. A time domain of the first resource may partially overlap or not overlap the resource corresponding to the at least one RO associated with the first SSB. For example, the frequency domain of the first resource completely or partially overlaps a resource #2 corresponding to an RO #2 associated with the first SSB, and the time domain of the first resource may partially overlap or not overlap the resource #2. When the frequency domain of the first resource completely overlaps the resource corresponding to the at least one RO associated with the first SSB, the information indicating the first resource may not include a large amount of indication information of time-frequency domain resources. This may also be understood as that the first NTN apparatus may not need to use a large quantity of bits to indicate the frequency domain resource of the first resource. For example, it may be determined, in a protocol definition manner or through negotiation, that the time domain resource of the first resource completely overlaps a frequency domain resource of the resource #2 corresponding to the RO #2. In this way, a quantity of bits occupied by the information indicating the first resource can be reduced, thereby reducing signaling overheads.

The information A2 is the information indicating the power value.

In embodiments of this application, the information indicating the power value may include, for example, one or more power values. The terminal apparatus may determine, based on the power value, a transmit power value corresponding to the first signal, and send the first signal on the first resource at the transmit power value corresponding to the first signal. Because a plurality of terminal apparatuses may send signals on the first resource, and the first NTN apparatus needs to estimate, based on a received power value corresponding to the first resource, the quantity of terminal apparatuses having the access requirement, power values of signals sent by the terminal apparatuses need to be close or the same when the signals arrive at the first NTN apparatus. In this way, accuracy of the quantity of terminal apparatuses estimated by the first NTN apparatus can be improved. However, in this embodiment of this application, the first configuration information may indicate the power value, so that the accuracy of the quantity of terminal apparatuses estimated by the first NTN apparatus can be improved.

In a possible implementation, the power value indicated by the information indicating the power value may be, for example, a received power value or a transmit power value of the terminal apparatus. The received power value may be an expected received power value, and the expected received power value may also have another name. For example, the expected received power value may be written as preamble received target power When a power value indicated by the information indicating the power value is the expected received power value, the terminal apparatus may calculate the transmit power value of the terminal apparatus based on information such as the expected received power value and a path loss. For example, the transmit power value is a sum of the expected received power value and a power value corresponding to the path loss.

In another possible implementation, the power value indicated by the information indicating the power value has an association relationship with a position of one or more reference points. For example, the information indicating the power value may indicate a power value of one or more reference points (for example, the power value is a transmit power value). The first configuration information may further include information indicating one or more reference points associated with the power value. For example, the reference points may include a position in the coverage area of the first NTN apparatus, or may include a position in a region corresponding to the first SSB, for example, a position of a central point of the region corresponding to the first SSB. The region corresponding to the first SSB may be understood as a coverage area of a beam associated with the first SSB. The coverage area may be, for example, a circle. There may be a difference between a power value corresponding to an edge of the circle and a power value corresponding to a center of the region, and the difference may be self-defined, for example, may be 3 decibels (decibel, dB). In this solution, power values of signals sent by terminal apparatuses at various positions may be close or the same when the signals arrive at the first NTN apparatus, thereby improving accuracy of the quantity of terminal apparatuses estimated by the first NTN apparatus.

For example, the information indicating the power value indicates that a power value (for example, a transmit power value) corresponding to a central position in the region corresponding to the first SSB is P1, and a power value (for example, a transmit power value) corresponding to an edge region of the region corresponding to the first SSB may be (P1+3 dB). The terminal apparatus may perform, based on a position of the terminal apparatus, P1, and (P1+3 dB), interpolation on positions and transmit power values that are of a plurality of reference points, to calculate a power value (for example, a transmit power value) corresponding to the terminal apparatus.

The information A3 is the information indicating the first signal.

In a possible implementation, the first signal may be a signal defined in a protocol or a signal negotiated in advance. In another possible implementation, the first signal may be indicated by the first NTN apparatus based on the first configuration information.

In a possible implementation, the first signal is a first preamble sequence, and the information indicating the first signal may be replaced with information indicating the first preamble sequence. It can be learned that a preamble sequence may be reused in this solution. In this case, the information indicating the first signal may be the same as an existing parameter item indicating the preamble sequence, and a specific parameter value may be set separately. It can be learned that this solution is compatible with a conventional technology.

The information indicating the first preamble sequence may include, for example, at least one of the following: a type of the first preamble sequence, a length of the first preamble sequence, a root sequence of the first preamble sequence, a quantity of repetitions of the first preamble sequence, and a cyclic shift corresponding to the first preamble sequence. For example, a cyclic shift may be defined by using a parameter Ncs, where Ncs=0 indicates a cyclic shift 0. When the cyclic shift is a random cyclic shift, the random cyclic shift may be defined by a protocol or indicated by the first NTN apparatus.

In a possible implementation, the cyclic shift corresponding to the first preamble sequence is a cyclic shift 0. This may also be understood as that preamble sequences sent by a plurality of terminal apparatuses in the region associated with the first SSB are the same. For signals sent by a plurality of terminal apparatuses on the first resource, the first NTN apparatus does not need to identify transmit ends of the signals, so that the signals sent by the terminal apparatuses do not need to have effect of distinguishing between the terminal apparatuses. Therefore, the cyclic shift corresponding to the first preamble sequence sent by the terminal apparatus may be the cyclic shift 0. This solution can reduce solution processing complexity of the transmit end.

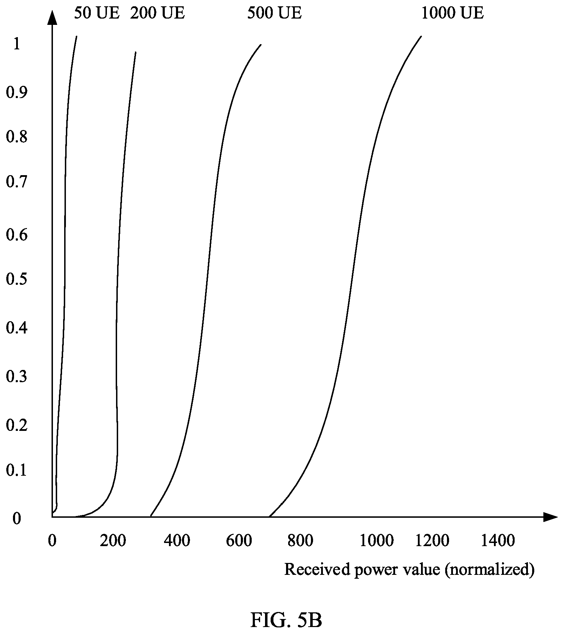

In another possible implementation, the cyclic shift corresponding to the first preamble sequence is a random cyclic shift. This may also be understood as that preamble sequences sent by a plurality of terminal apparatuses in the region associated with the first SSB may be different or may be the same, and these cases are random. In this solution, randomness of a phase can be increased, so that distribution of received power values of the first NTN apparatus is more centralized (for details, refer to related descriptions in FIG. 5B subsequently), and a quantity of terminal apparatuses having an access requirement can be more accurately determined.

In a possible implementation, the information indicating the first preamble sequence may alternatively reuse a parameter of configuration information of an existing preamble sequence used for random access. For example, the information indicating the first preamble sequence may alternatively be indicated by using a root indication parameter (for example, a parameter prach_RootSequenceIndex). In this embodiment of this application, a cyclic shift manner (for example, the random cyclic shift or the cyclic shift 0) may be determined in an agreed manner, or may be indicated by the first NTN apparatus. It can be learned from this implementation that, an existing configuration manner of configuring a preamble sequence used for random access may alternatively be reused for the configuration manner of the information indicating the first preamble sequence in this embodiment of this application. A specific parameter value may be separately set, and a parameter item defined in an existing protocol may be reused. Therefore, this solution can be more compatible with the conventional technology.

When the coverage area of the first NTN apparatus is divided into a plurality of regions, information indicating a preamble sequence may be configured for each region, and root sequences of preamble sequences configured for two regions may be the same or may be different. For related content of the preamble sequence configured for each region, refer to related descriptions of the first preamble sequence. Details are not described again.

The information A1, the information A2, and the information A3 may be carried in one piece of information, or may be carried in a plurality of messages. In embodiments of this application, an example in which the three pieces of information are carried in a same message is used for description.

In a possible implementation, the first configuration information may be carried in a cell-level broadcast message. In this way, the first NTN apparatus may perform maintenance at a cell granularity. For example, one set of configuration information may be maintained for one cell (for example, one cell corresponds to the first configuration information, and a terminal apparatus of the cell may perform a subsequent operation based on the first configuration information). This solution can reduce working complexity of a first NTN apparatus side. In another possible implementation, the first configuration information may be carried in a beam-level broadcast message. In this way, the first NTN apparatus may perform maintenance at a beam granularity. For example, one set of configuration information may be maintained for one beam (for example, one beam (or a cell associated with the first SSB) corresponds to the first configuration information, and a terminal apparatus in a coverage area of the beam may perform a subsequent operation based on the first configuration information). Two sets of configuration information corresponding to two beams may be different. This solution improves flexibility of a solution.

Step 302: The terminal apparatus sends the first signal on the first resource.

Correspondingly, the first NTN apparatus receives the first signal on the first resource.

The first resource may be associated with a region in the coverage area of the first NTN apparatus. For example, the first resource may be associated with the first SSB. In this way, the first resource may be used by at least one terminal apparatus that is in the region associated with the first SSB to send a signal. Step 302 may alternatively be replaced with the following: One or more terminal apparatuses in the region associated with the first SSB send one or more signals on the first resource (where the first signal belongs to these signals). Correspondingly, the first NTN apparatus receives, on the first resource, the signals from the one or more terminal apparatuses.

One terminal apparatus is used as an example for description. In a possible implementation, the first signal sent by the terminal apparatus on the first resource may be the first preamble sequence. When the first configuration information indicates that there is a power value, the terminal apparatus may determine a power value corresponding to the first signal, and send the first signal at the power value. For a solution in which the terminal apparatus determines the first preamble sequence and the power value, refer to related example descriptions in step 301. Details are not described again.

Step 303: The first NTN apparatus determines the received power value corresponding to the first resource.

The received power value corresponding to the first resource has a plurality of usages. In embodiments of this application, an example in which the received power value corresponding to the first resource is used to determine the quantity of terminal apparatuses having the random access requirement is used for description.

Step 304: The first NTN apparatus determines, based on the received power value corresponding to the first resource, the quantity of terminal apparatuses having the random access requirement.

For example, a larger received power value corresponding to the first resource indicates a larger quantity of terminal apparatuses that may have a random access requirement. For another example, a smaller received power value corresponding to the first resource indicates a smaller quantity of terminal apparatuses that may have a random access requirement. In a possible implementation, an association relationship between a received power value and a quantity of terminal apparatuses may be determined based on historical experience or some historical values. After obtaining the received power value corresponding to the first resource, the first NTN apparatus may search for the association relationship, and find, from the association relationship, a quantity of terminal apparatuses corresponding to the received power value. The quantity may be considered as the quantity of terminal apparatuses having the random access requirement.

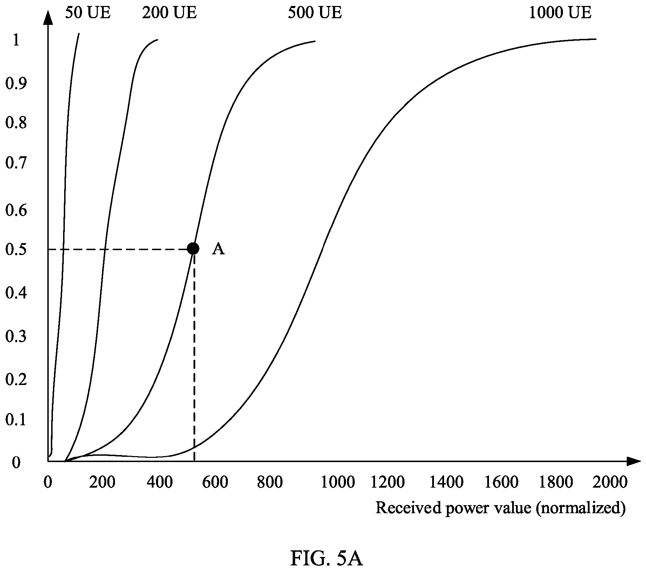

FIG. 5A and FIG. 5B are examples of simulation diagrams of received power values, corresponding to a first resource, for different quantities of terminal apparatuses. Curves shown in FIG. 5A and FIG. 5B may also be understood as cumulative distribution function (cumulative distribution function, CDF) curves. In FIG. 5A and FIG. 5B, a curve of 50 UE indicates a case in which a region associated with a first SSB includes 50 terminal apparatuses having access requirements, a curve of 200 UE indicates a case in which the region associated with the first SSB includes 200 terminal apparatuses having access requirements, a curve of 500 UE indicates a case in which the region associated with the first SSB includes 500 terminal apparatuses having access requirements, and a curve of 1000 UE indicates a case in which the region associated with the first SSB includes 1000 terminal apparatuses having access requirements. Refer to FIG. 5A. The curve corresponding to 500 UE is used as an example for description. It can be learned from FIG. 5A that when the region associated with the first SSB includes 500 terminal apparatuses having access requirements, received power values of the first NTN apparatus on the first resource are basically distributed between 200 and 1000. A point A on the curve corresponding to 500 UE is used as an example for description. A horizontal coordinate corresponding to the point A is 500, and a vertical coordinate corresponding to the point A is 0.5. This meaning indicates that when the region associated with the first SSB includes 500 terminal apparatuses (500 UE) having the access requirements, a probability that the received power value of the first NTN apparatus on the first resource is less than or equal to 500 (where the horizontal coordinate is 500) is 50% (where the vertical coordinate is 0.5), and the received power values have a high probability of being distributed in a range around 500. It can be learned from FIG. 5A that distribution of received power values of the first NTN apparatus is apparently different for different quantities of terminal apparatuses. Based on this, in the solution provided in embodiments of this application, the quantity, of terminal apparatuses, determined based on the received power value is accurate.

Refer to FIG. 5B. Compared with FIG. 5A, in FIG. 5B, a difference lies in that random cyclic shifts corresponding to preamble sequences sent by terminal apparatuses are different. In FIG. 5A, an example in which a random cyclic shift corresponding to a preamble sequence sent by a terminal apparatus is 0 is used for illustration. In FIG. 5B, an example in which a cyclic shift corresponding to a preamble sequence sent by a terminal apparatus is a random cyclic shift is used for illustration. Other content is similar to that in FIG. 5A, and mutual reference may be made to each other. It can be learned from a comparison between FIG. 5A and FIG. 5B that when the random cyclic shift is used, distribution of received power values for different quantities of UE is more centralized. For example, in FIG. 5B, when the region associated with the first SSB includes 500 terminal apparatuses having access requirements, received power values of the first NTN apparatus on the first resource are basically distributed between 400 and 600. Then, a quantity of terminal apparatuses estimated based on the solution in FIG. 5B is more accurate.

Step 305: The first NTN apparatus sends second configuration information.

Correspondingly, the terminal apparatus receives the second configuration information.

The second configuration information indicates a second resource. The second resource is used for perform random access by a terminal apparatus that is in the region associated with the first SSB. The second resource is determined based on the quantity of terminal apparatuses that have the random access requirement and that are in the region associated with the first SSB.

Step 306: The terminal apparatus sends a second preamble sequence on a resource in the second resource.

Correspondingly, the first NTN apparatus receives the second preamble sequence on the resource in the second resource. The second preamble sequence is used for random access.

A message used for sending the second preamble sequence may be a random access message, for example, a two-step random access message (message) A, or a four-step random access message 1.

In this embodiment of this application, the first NTN apparatus may allocate, based on the quantity of terminal apparatuses that have the access requirement and that are in the region associated with the first SSB, a resource used for random access to the terminal apparatus that is in the region associated with the first SSB. Quantities of resources used for random access that are allocated to regions associated with two SSBs may be different (or may be the same). The quantity of resources used for random access may be understood as a quantity of ROs. For example, a quantity of ROs allocated to an SSB #0 is 4, a quantity of ROs allocated to an SSB #1 is 2, and a quantity of ROs allocated to an SSB #3 is 4. In other words, the first NTN apparatus may allocate a resource, used for random access, at a granularity of the region associated with the SSB (or referred to as a beam granularity). Not a same random access resource is allocated to a region associated with each SSB of a cell. In this way, in this solution, a resource used for random access can be allocated more reasonably, random access requirements in different regions can be met, resources can be saved, and resource utilization can be improved.

In another possible implementation, at a granularity of a region associated with an SSB (or referred to as a beam granularity), configuration information (for example, second configuration information) that is used for configuring a random access resource and that is of a region associated with an SSB varies with a quantity of access requirements. Therefore, compared with another system message, the configuration information (for example, the second configuration information) used for configuring the random access resource may be updated more frequently. Based on this, in a possible implementation, the configuration information (for example, the second configuration information) used for configuring the random access resource may be configured as an independent system message, and an independent update periodicity is configured for the system message. The system message does not need to be updated at a same frequency as another system message. Therefore, the terminal apparatus can be prevented from repeatedly parsing the another system message, and resource overheads can be reduced.

In a possible implementation, the first NTN apparatus may periodically determine the quantity of terminal apparatuses having the random access requirement, and duration of such a periodicity may be, for example, at a millisecond level, a second level, a minute level, an hour level, or a day level. In this way, the quantity of terminal apparatuses having the random access requirement can be matched with an actual situation.

In another possible implementation, a signal received by the first NTN apparatus on the first resource may further have a plurality of usages. The solution provided in step 303 and step 304 is an example, and step 303 and step 304 are not mandatory steps, and may not be performed. In a possible implementation, the quantity, of terminal apparatuses having the access requirement, determined by the first NTN apparatus may have a plurality of usages. For example, a resource may be allocated based on the quantity. The solution provided in step 305 and step 306 is an example, and step 305 and step 306 are not mandatory steps, and may not be performed.

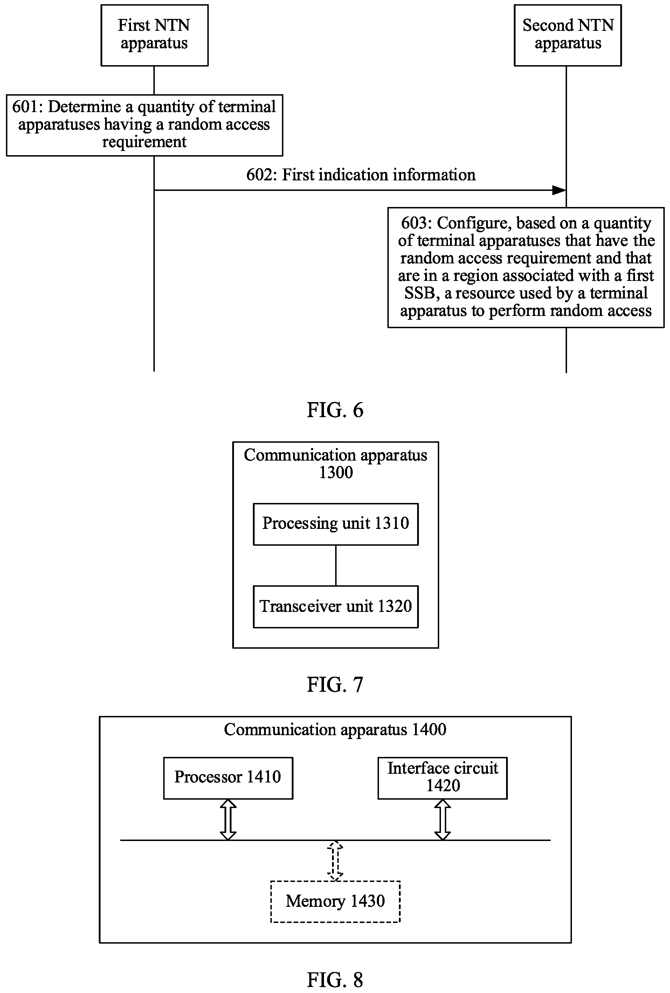

Based on the content shown in FIG. 1, FIG. 2A, FIG. 2B, FIG. 3, FIG. 4, FIG. 5A, and FIG. 5B and the foregoing other content, FIG. 6 is an example of a possible schematic flowchart of a communication method according to an embodiment of this application. For ease of understanding, interaction between a first NTN apparatus and a second NTN apparatus is used as an example in FIG. 6 for description. FIG. 6 may also be considered as an extended embodiment of FIG. 3. For example, the second NTN apparatus may be a satellite or a chip (or a chip system) in the satellite in FIG. 2A or FIG. 2B. For another example, the second NTN apparatus may be a gateway (or referred to as a ground station, an earth station, a satellite gateway station, or a gateway station) or a chip (or a chip system) in the gateway in FIG. 2A or FIG. 2B. For another example, the second NTN apparatus may be an access network device (an access network device deployed on a satellite or the ground) or a chip (or a chip system) in the access network device in FIG. 2A or FIG. 2B. The second NTN apparatus is a network device in a communication architecture including an NTN, and the second NTN apparatus may alternatively be replaced with a network apparatus. Alternatively, when the solution provided in embodiments of this application is applicable to another communication architecture, the second NTN apparatus may alternatively be replaced with a name of an apparatus in the another communication architecture. For a related example of the first NTN apparatus, refer to the related description in FIG. 3. Details are not described again.

The following provides descriptions with reference to FIG. 6.

Step 601: The first NTN apparatus determines a quantity of terminal apparatuses having a random access requirement.

In step 601, the first NTN apparatus may determine, according to the solution provided in FIG. 3 (for example, the foregoing step 301, step 302, step 303, and step 304), the quantity of terminal apparatuses having the random access requirement, and related content is not described again.

Step 602: The first NTN apparatus sends first indication information.

Correspondingly, the second NTN apparatus receives the first indication information.

In a possible implementation, the first indication information indicates a quantity of terminal apparatuses that have the random access requirement and that are in a region associated with a first SSB. In this way, the second NTN apparatus may determine, based on the first indication information rather than the solution provided in FIG. 3 (for example, the foregoing step 301, step 302, step 303, and step 304), the quantity of terminal apparatuses that have the random access requirement and that are in the region associated with the first SSB, so that workload of the second NTN apparatus can be reduced.

In another possible implementation, the first indication information further indicates information about a region associated with the quantity of terminal apparatuses having the random access requirement, and the region may be the region associated with the first SSB. The first indication information indicates the quantity of terminal apparatuses that have the random access requirement and that are in the region associated with the first SSB. The first indication information may further include information indicating the region associated with the first SSB, for example, may include a beam identifier of the region. In this way, the second NTN apparatus may determine, based on the first indication information, a quantity of terminal apparatuses that have the random access requirement and that are in a region, and then allocate a resource (for example, a random access resource) at a region granularity.

In another possible implementation, the first indication information further includes validity period information of the quantity of terminal apparatuses having the random access requirement. The validity period information of the quantity of terminal apparatuses having the random access requirement may include, for example, information about a remaining validity period of the quantity of terminal apparatuses having the random access requirement. In another possible implementation, the quantity of terminal apparatuses having the random access requirement may be determined periodically, and duration of such a periodicity may be, for example, at a millisecond level, a second level, a minute level, an hour level, or a day level. The validity period information of the quantity of terminal apparatuses having the random access requirement may include remaining duration in a current periodicity.

When the information that is about the quantity of terminal apparatuses having the random access requirement and that is indicated by the first indication information is within a validity period, the second NTN apparatus can allocate, by using the information, a resource used for random access. After the information that is about the quantity of terminal apparatuses having the random access requirement and that is indicated by the first indication information is invalid (or after a validity period expires), the second NTN apparatus may re-determine, according to the solution provided in FIG. 3 (for example, the foregoing step 301, step 302, step 303, and step 304), the quantity of terminal apparatuses that have the random access requirement and that are in the region associated with the first SSB. In this way, the quantity of terminal apparatuses having the random access requirement can be matched with an actual situation.

Step 603: The second NTN apparatus configures, based on the quantity of terminal apparatuses that have the random access requirement and that are in the region associated with the first SSB, a resource used by the terminal apparatus to perform random access.

After obtaining the quantity of terminal apparatuses that have the random access requirement and that are in the region associated with the first SSB, the second NTN apparatus configures, based on the quantity, the resource that is used for random access for the terminal apparatus and that is in the region associated with the first SSB. Further, the second NTN apparatus may further send, to the terminal apparatus, configuration information indicating the terminal apparatus that is in the region associated with the first SSB to configure the resource used for random access. The terminal apparatus in the region associated with the first SSB may initiate random access to the second NTN apparatus on one or more resources, for example, send, on these resources, a preamble sequence used for random access. For a related solution, refer to the foregoing step 305 and step 306. Descriptions are similar, and details are not described again.

For a same region, for example, the region associated with the first SSB, when inter-satellite switching occurs in the region, where for example, the first NTN apparatus originally provides a service for the region, and now the second NTN apparatus provides a service for the region, the first NTN apparatus may send, to the second NTN apparatus, information about the quantity of terminal apparatuses that have the random access requirement and that are in the region, so that the second NTN apparatus can be prevented from repeatedly performing a solution of determining the quantity of terminal apparatuses having the random access requirement. Therefore, power consumption of the second NTN apparatus can be reduced.

It may be understood that, to implement functions in the foregoing embodiments, the first NTN apparatus, the second NTN apparatus, and the terminal apparatus may include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 7 and FIG. 8 are diagrams of possible structures of communication apparatuses according to embodiments of this application. The communication apparatuses may be configured to implement functions of the terminal apparatus or the NTN apparatus in the foregoing method embodiments. Therefore, beneficial effects of the foregoing method embodiments can also be implemented. In embodiments of this application, the communication apparatus may be the terminal apparatus shown in FIG. 2A or FIG. 2B, or may be the NTN apparatus (for example, a satellite, a gateway, or an access network device) shown in FIG. 2A or FIG. 2B, or may be a chip system used in the terminal device or the network device shown in FIG. 2A or FIG. 2B.

As shown in FIG. 7, the communication apparatus 1300 includes a processing unit 1310 and a transceiver unit 1320. The communication apparatus 1300 is configured to implement functions of the terminal apparatus, the first NTN apparatus, or the second NTN apparatus in the method embodiments shown in FIG. 3 or FIG. 6. The transceiver unit 1320 may also be referred to as a communication unit. The transceiver unit 1320 may include a sending unit and a receiving unit.

When the communication apparatus 1300 is configured to implement the function of the terminal apparatus in the method embodiment shown in FIG. 3, in a possible implementation, the transceiver unit 1320 is configured to receive first configuration information. The processing unit 1310 is configured to send a first signal on a first resource, where a received power value corresponding to the first resource is used for determining a quantity of terminal apparatuses having a random access requirement.

When the communication apparatus 1300 is configured to implement the function of the terminal apparatus in the method embodiment shown in FIG. 3, in a possible implementation, the transceiver unit 1320 is configured to: receive second configuration information, and send a second preamble sequence on a resource in a second resource.

When the communication apparatus 1300 is configured to implement the function of the terminal apparatus in the method embodiment shown in FIG. 3, in a possible implementation, the processing unit 1310 is configured to determine, based on the power value, a transmit power value corresponding to the first signal. The transceiver unit 1320 is configured to send the first signal on the first resource at the transmit power value corresponding to the first signal.

When the communication apparatus 1300 is configured to implement the function of the terminal apparatus in the method embodiment shown in FIG. 3, in a possible implementation, the processing unit 1310 is configured to determine, based on the power value and a position of the terminal apparatus in a region associated with a first SSB, the transmit power value corresponding to the first signal.

When the communication apparatus 1300 is configured to implement the function of the first NTN apparatus in the method embodiment shown in FIG. 3, in a possible implementation, the transceiver unit 1320 is configured to: send the first configuration information, and receive the first signal on the first resource. The processing unit 1310 is configured to determine, based on the received power value corresponding to the first resource, the quantity of terminal apparatuses having the random access requirement.

When the communication apparatus 1300 is configured to implement the function of the first NTN apparatus in the method embodiment shown in FIG. 3, in a possible implementation, the processing unit 1310 is configured to determine, based on the received power value corresponding to the first resource, a quantity of terminal apparatuses that have the random access requirement and that are in the region associated with the first SSB.

When the communication apparatus 1300 is configured to implement the function of the first NTN apparatus in the method embodiment shown in FIG. 3, in a possible implementation, the transceiver unit 1320 is configured to: send the second configuration information, and receive the second preamble sequence on the resource in the second resource.

When the communication apparatus 1300 is configured to implement the function of the first NTN apparatus in the method embodiment shown in FIG. 6, in a possible implementation, the transceiver unit 1320 is configured to send first indication information.

When the communication apparatus 1300 is configured to implement the function of the second NTN apparatus in the method embodiment shown in FIG. 6, in a possible implementation, the transceiver unit 1320 is configured to receive the first indication information, where the first indication information indicates the quantity of terminal apparatuses that have the random access requirement and that are in the region associated with the first SSB. The processing unit 1310 is configured to configure, based on the quantity of terminal apparatuses that have the random access requirement and that are in the region associated with the first SSB, a resource used by the terminal apparatus to perform random access.

For more detailed descriptions of the processing unit 1310 and the transceiver unit 1320, refer to related descriptions in the method embodiments shown in FIG. 3 or FIG. 6.

As shown in FIG. 8, the communication apparatus 1400 includes a processor 1410 and an interface circuit 1420. The processor 1410 is coupled to the interface circuit 1420. It can be understood that the interface circuit 1420 may be a transceiver or an input/output interface. The transceiver includes a transmitter and a receiver. The transmitter may be configured to send information or a signal, the receiver may be configured to receive information, and another function may be implemented by a processor. The input/output interface is configured to input and/or output information. An output may be understood as sending, an input may be understood as receiving, and another function may be implemented by the processor. Optionally, the communication apparatus 1400 may further include a memory 1430 configured to: store instructions executed by the processor 1410, store input data needed by the processor 1410 to run the instructions, or store data generated after the processor 1410 runs the instructions.

When the communication apparatus 1400 is configured to implement the method shown in FIG. 3 or FIG. 6, the processor 1410 is configured to implement the function of the processing unit 1310, and the interface circuit 1420 is configured to implement the function of the transceiver unit 1320.

When the communication apparatus is a chip used in a terminal, the chip in the terminal implements the function of the terminal apparatus in the foregoing method embodiments. That the chip in the terminal receives information from a base station may be understood as that the information is first received by another module (for example, a radio frequency module or an antenna) in the terminal, and then sent by the module to the chip in the terminal. That the chip in the terminal sends information or a signal to a base station may be understood as that the information is first sent to another module (for example, a radio frequency module or an antenna) in the terminal, and then sent by the module to the base station.

When the communication apparatus is a chip used in a base station, the chip in the base station implements the function of the NTN apparatus in the foregoing method embodiments. That the chip in the base station receives information from a terminal may be understood as that the information is first received by another module (for example, a radio frequency module or an antenna) in the base station, and then sent by the module to the chip in the base station. That the chip in the base station sends information or a signal to a terminal may be understood as that the information is first sent to another module (for example, a radio frequency module or an antenna) in the base station, and then sent by the module to the terminal.

Based on a same concept, an embodiment of this application further provides a computer-readable storage medium. The storage medium stores a computer program or instructions. When the computer program or the instructions are executed by a communication apparatus, the method shown in FIG. 3 or FIG. 6 is implemented.

Based on a same concept, an embodiment of this application further provides a computer program product. The computer program product stores a computer program, the computer program includes program instructions, and when the program instructions are executed by a computer, the method shown in FIG. 3 or FIG. 6 may be implemented.

In this application, that an entity A sends information or a signal to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives, through another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, numeral numbers "first" and "second" and letter numbers "A1 and A2", "B1 and B2", and "C1 and C2") in embodiments of this application are merely used for differentiation for ease of description, and are not used to limit the scope of embodiments of this application. Sequence numbers of the foregoing processes do not mean an order of execution. The order of execution of the processes should be determined based on functions and internal logic of the processes.

## Claims

1. A communication method, wherein the method is applicable to a terminal apparatus, and the method comprises:
receiving first configuration information, wherein the first configuration information comprises information indicating a first resource; and
sending a first signal on the first resource, wherein a received power value corresponding to the first resource is used for determining a quantity of terminal apparatuses having a random access requirement.

2. The method according to claim 1, wherein the first resource is associated with a first synchronization signal and physical broadcast channel block SSB; and
the received power value corresponding to the first resource is used for determining a quantity of terminal apparatuses that have the random access requirement and that are in a region associated with the first SSB.

3. The method according to claim 1 or 2, wherein the first signal is a first preamble sequence, and the first configuration information further comprises information indicating the first preamble sequence.

4. The method according to claim 3, wherein the information indicating the first preamble sequence comprises information indicating at least one of the following:
a type of the first preamble sequence, a length of the first preamble sequence, a root sequence of the first preamble sequence, a quantity of repetitions of the first preamble sequence, and a cyclic shift corresponding to the first preamble sequence.

5. The method according to claim 3 or 4, wherein the cyclic shift corresponding to the first preamble sequence is a cyclic shift 0; or
the cyclic shift corresponding to the first preamble sequence is a random cyclic shift.

6. The method according to any one of claims 1 to 5, wherein the method further comprises:
receiving second configuration information, wherein the second configuration information indicates a second resource, the second resource is used for perform random access by a terminal apparatus that is in the region associated with the first SSB, and the second resource is determined based on the quantity of terminal apparatuses that have the random access requirement and that are in the region associated with the first SSB; and
sending a second preamble sequence on a resource in the second resource, wherein the second preamble sequence is used for random access.

7. The method according to any one of claims 1 to 6, wherein the first resource meets one of the following:
the first resource belongs to a resource corresponding to a random access occasion RO associated with the first SSB; or
the first resource does not belong to a resource corresponding to an RO associated with the first SSB, and a time domain of the first resource completely or partially overlaps a resource corresponding to at least one random access occasion associated with the first SSB.

8. The method according to any one of claims 1 to 7, wherein the first configuration information further comprises information indicating a power value;
the method further comprises:
determining, based on the power value, a transmit power value corresponding to the first signal; and
the sending the first signal on the first resource comprises:
sending the first signal on the first resource at the transmit power value corresponding to the first signal.

9. The method according to claim 8, wherein the determining, based on the power value, the transmit power value corresponding to the first signal comprises:
determining, based on the power value and a position of the terminal apparatus in the region associated with the first SSB, the transmit power value corresponding to the first signal.

10. The method according to any one of claims 1 to 9, wherein the quantity of terminal apparatuses having the random access requirement is used for resource configuration.

11. A communication method, wherein the method is applicable to a first non-terrestrial network NTN apparatus, and the method comprises:
sending first configuration information, wherein the first configuration information comprises information indicating a first resource;
receiving a first signal on the first resource; and
determining, based on a received power value corresponding to the first resource, a quantity of terminal apparatuses having a random access requirement.

12. The method according to claim 11, wherein the first resource is associated with a first synchronization signal and physical broadcast channel block SSB; and
the determining, based on the received power value corresponding to the first resource, the quantity of terminal apparatuses having the random access requirement comprises:
determining, based on the received power value corresponding to the first resource, a quantity of terminal apparatuses that have the random access requirement and that are in a region associated with the first SSB.

13. The method according to claim 11 or 12, wherein the first signal is a first preamble sequence, and the first configuration information further comprises information indicating the first preamble sequence.

14. The method according to claim 13, wherein the information indicating the first preamble sequence comprises at least one of the following:
a type of the first preamble sequence, a length of the first preamble sequence, a root sequence of the first preamble sequence, a quantity of repetitions of the first preamble sequence, and a cyclic shift corresponding to the first preamble sequence.

15. The method according to claim 13 or 14, wherein the cyclic shift corresponding to the first preamble sequence is a cyclic shift 0; or
the cyclic shift corresponding to the first preamble sequence is a random cyclic shift.

16. The method according to any one of claims 11 to 15, wherein the method further comprises:
sending second configuration information, wherein the second configuration information indicates a second resource, the second resource is used for random access by a terminal apparatus that is in the region associated with the first SSB, and the second resource is determined based on the quantity of terminal apparatuses that have the random access requirement and that are in the region associated with the first SSB; and
receiving a second preamble sequence on a resource in the second resource, wherein the second preamble sequence is used for random access.

17. The method according to any one of claims 11 to 16, wherein the first resource meets one of the following:
the first resource belongs to a resource corresponding to a random access occasion RO associated with the first SSB; or
the first resource does not belong to a resource corresponding to an RO associated with the first SSB, and a time domain of the first resource completely or partially overlaps a resource corresponding to at least one random access occasion associated with the first SSB.

18. The method according to any one of claims 11 to 17, wherein the first configuration information further comprises information indicating a power value, and a transmit power value corresponding to the first signal is determined based on the power value.

19. The method according to claim 18, wherein the transmit power value corresponding to the first signal is determined based on the power value and a position of the terminal apparatus in the region associated with the first SSB.

20. The method according to any one of claims 11 to 19, wherein the method is applicable to the first NTN apparatus, and the method comprises:
sending first indication information, wherein the first indication information indicates the quantity of terminal apparatuses having the random access requirement.

21. The method according to claim 20, wherein the first indication information further comprises:
information about a coverage area of the region associated with the first SSB, wherein the first indication information indicates the quantity of terminal apparatuses that have the random access requirement and that are in the region associated with the first SSB; and/or
validity period information of the quantity of terminal apparatuses having the random access requirement.

22. The method according to any one of claims 11 to 21, wherein the quantity of terminal apparatuses having the random access requirement is used for resource configuration.

23. A communication apparatus, comprising a module configured to perform the method according to any one of claims 1 to 10, or comprising a module configured to perform the method according to any one of claims 11 to 22.

24. A communication apparatus, comprising a processor, wherein the processor is configured to implement the method according to any one of claims 1 to 10, or implement the method according to any one of claims 11 to 22 by using a logic circuit or by executing a computer program or instructions.

25. A computer-readable storage medium, wherein the storage medium stores a computer program or instructions, and when the computer program or the instructions are executed by a communication apparatus, the method according to any one of claims 1 to 10 is implemented or the method according to any one of claims 11 to 22 is implemented.

26. A computer program product, wherein the computer program product stores a computer program, the computer program comprises program instructions, and when the program instructions are executed by a computer, the computer is caused to perform the method according to any one of claims 1 to 10 or the method according to any one of claims 11 to 22.
